# FASCICULE DE BREVET EUROPEEN

(11) **EP 1 671 192 B1**
(45) Date de publication et mention de la délivrance du brevet: **13.06.2007**
(21) Numéro de dépôt: 04787315.3
(22) Date de dépôt: 06.09.2004
(51) Int. Cl.: G05B 19/401

(54) **PROCEDE D' ETALONNAGE D' UNE MACHINE DE PERCAGE DE VERRES OPHTALMIQUES, DISPOSITIF POUR LA MISE EN OEUVRE D' UN TEL PROCEDE, ET APPAREIL D' USINAGE DE VERRES OPHTALMIQUES EQUIPE D' UN TEL DISPOSITIF**
VERFAHREN ZUM KALIBRIEREN EINER BRILLENLINSEN-DURCHDRINGUNGSMASCHINE, EINRICHTUNG ZUR IMPLEMENTIERUNG EINES SOLCHEN VERFAHRENS UND EINE SOLCHE EINRICHTUNG UMFASSENDE BRILLENLINSEN-BEARBEITUNGS-VORRICHTUNG
METHOD OF CALIBRATING AN OPHTHALMIC-LENS-PIERCING MACHINE, DEVICE USED TO IMPLEMENT ONE SUCH METHOD AND OPHTHALMIC-LENS-MACHINING APPARATUS COMPRISING ONE SUCH DEVICE

(30) Priorité: 10.10.2003 FR 0311913
(43) Date de publication de la demande: 21.06.2006
(73) Titulaire: BRIOT INTERNATIONAL, 27340 Pont de l'Arche (FR)
(72) Inventeur: VASSARD, Micha¬l, F-76520 Boos (FR); VIDECOQ, Jean-Jacques, F-76570 Pavilly (FR)
(74) Mandataire: Domenego, Bertrand
(86) Numéro de dépôt international: PCT/FR2004/002260
(87) Numéro de publication internationale: WO 2005/036286

(56) Documents cités:
- EP-A- 0 559 385
- WO-A-99/10136
- DE-A- 3 915 391
- DE-A- 4 438 634
- US-A- 4 163 622
- US-A1- 2001 016 786
- VERNON SMITH W: "EVALUATING DRILLING MACHINES' HOLE LOCATION ACCURACY" ELECTRONIC PACKAGING AND PRODUCTION, CAHNERS PUBLISHING CO, NEWTON, MASSACHUSETTS, US, vol. 33, no. 3, 1 mars 1993 (1993-03-01), pages 42-44, XP000356071 ISSN: 0013-4945

## Description

La présente invention concerne un procédé d'étalonnage d'une machine de perçage de verres ophtalmiques, ladite machine comprenant :
- un outil de perçage ;
- un support de verre ophtalmique associé à un premier repère ; et
- des moyens programmables de pilotage de l'outil, associés à un deuxième repère dans lequel sont exprimées des coordonnées de consigne définissant un point cible de perçage,
procédé dans lequel on réalise les étapes successives suivantes :
- on place sur le support un gabarit sur lequel on a préalablement porté des marquages définissant un troisième repère lié audit gabarit, de façon à faire coïncider sensiblement le troisième repère avec le premier ; et
- on perce le gabarit en au moins un point prédéterminé correspondant à un point-cible défini par des coordonnées de consigne prédéterminées, de façon à obtenir un point de perçage réel.

Le document "Evaluating drilling machines' hole location accuracy", de Vernon Smith W., décrit un procédé d'étalonnage d'une machine de perçage qui utilise des perçages d'essai dans un gabarit.

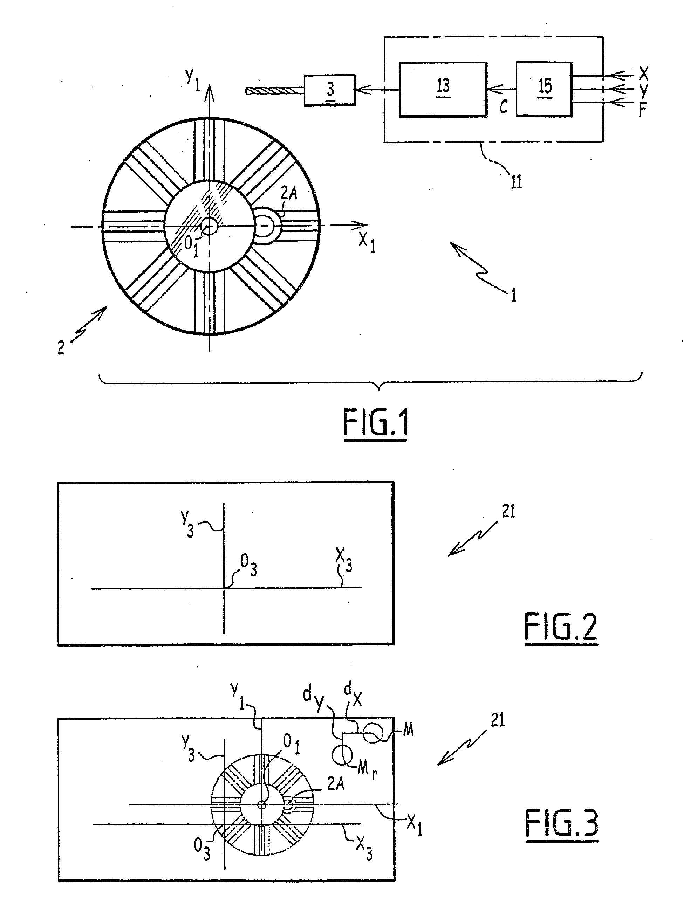

Sur la Figure 1, on a représenté schématiquement une machine 1 de perçage de verres ophtalmiques, de type connu, qui comprend essentiellement un support 2 sur lequel peut être monté et fixé un verre à meuler, un outil de perçage 3 déplaçable de façon contrôlée par rapport au support 2, et des moyens de pilotage 11 de l'outil 3.

Le support 2 est représenté schématiquement par un réceptacle permettant de fixer des verres ophtalmiques de différentes formes par rapport au bâti, dans un repère fixe de référence O₁, X₁, Y₁ associé au support 2. Le support 2 est prévu pour maintenir le verre ophtalmique dans un plan de support, qui sera supposé horizontal. Ainsi, les axes de référence X₁, Y₁ seront supposés horizontaux.

Le support 2 représenté est un réceptacle de forme intérieure complémentaire de celle d'un adaptateur, du type utilisé de façon classique pour fixer le verre sur l'arbre mobile d'une meuleuse. Un tel adaptateur est fixé, par exemple par collage, sur l'une des faces du verre. Le réceptacle 2, qui est destiné à recevoir par emboîtement un adaptateur de ce type, comporte une forme d'indexage 2A complémentaire d'une forme d'indexage de l'adaptateur, qui permet d'orienter le verre sur le support 2, et ainsi par rapport au bâti de la machine 1. Les moyens d'indexage 2A définissent donc l'orientation du support 2 et du bâti de la machine, c'est-à-dire le repère O₁, X₁, Y₁.

L'outil de perçage 3 est défini comme étant un outil qui réalise un enlèvement de matière autour d'un axe, supposé ici vertical (orthogonal aux axes X₁, Y₁), dans l'épaisseur du verre, sur une région du verre quasi-ponctuelle ou représentant une surface très inférieure à la surface du verre. Le terme de « perçage » pourra s'entendre d'une opération classique de perçage au moyen d'une mèche, aboutissant à la formation d'un orifice de section sensiblement circulaire, mais également d'une opération de « crantage » aboutissant à la formation d'une encoche en bordure du verre, ou de tout autre type d'alésage de forme plus complexe.

Les moyens 11 de pilotage de l'outil 3 sont prévus pour déplacer l'outil 3 en fonction d'une tâche d'usinage à accomplir sur un verre placé dans la machine. A cet effet, ces moyens de pilotage 11 comprennent des moyens d'entraînement 13 adaptés pour déplacer l'outil 3, et des moyens 15 de commande des moyens d'entraînement 13, adaptés pour délivrer aux moyens d'entraînement 13 un signal de consigne C, correspondant à la tâche d'usinage à accomplir. Les moyens de commande 15 sont des moyens programmables : ils sont prévus pour mémoriser un certain nombre de lois de commande paramétrées par la forme et la position du perçage à réaliser. Ainsi, la séquence de déplacements et d'opérations exécutée par l'outil 3, définie par le signal de consigne C, est fonction des valeurs de paramètres de forme et de position fournies en entrée aux moyens de commande 15. Ces paramètres sont désignés, sur la Figure 1, par la référence F (paramètres de forme) et par les références X, Y (paramètres de position). Les paramètres de position X, Y sont exprimés dans le deuxième repère associé aux moyens de pilotage 11, ce repère virtuel coïncidant théoriquement avec le premier repère de référence O₁, X₁, Y₁ lié au support 2.

Sur la Figure 2, on a représenté un verre ophtalmique 21 de forme générale rectangulaire, présentant sur une de ses faces, des marquages de centre O₃ et d'axes X₃, Y₃.

Le centre O₃ représente le centre optique du verre 21, et l'axe X₃ représente son axe optique. Le marquage de l'axe Y₃, perpendiculaire à l'axe X₃ dans le plan général du verre 21, a essentiellement pour objet de définir le centre optique O₃, à son intersection avec l'axe X₃.

Dans le cas d'une pose centrée d'un adaptateur sur une ébauche de verre ophtalmique aux fins de meulage, le centre de l'adaptateur coïncide avec le centre optique O₃ de l'ébauche.

C'est ainsi qu'après l'opération de meulage ayant conduit à l'obtention du verre 21 sous sa forme finie, lorsque l'on place le verre 21 muni de son adaptateur de meulage sur le support 2 aux fins de perçage dans la machine 1, le centre du support O₁ coïncide théoriquement avec le centre optique O₃ localisé par les marquages d'axe X₃, Y₃ sur le verre 21.

Si l'on désire ensuite percer un trou dans le verre 21 au moyen de la machine de perçage 1, les paramètres de position X, Y et de forme F doivent être fournis aux moyens de commande 15, comme indiqué précédemment. Par exemple, pour réaliser un perçage circulaire quasi-ponctuel, les paramètres de position X, Y sont constitués des coordonnées du centre M du perçage. Les coordonnées X, Y, qui sont exprimées dans le deuxième repère associé aux moyens de pilotage 11, représentent théoriquement les coordonnées du centre de perçage M dans le repère lié au verre, c'est-à-dire le troisième repère O₃, X₃, Y₃.

Or, lorsque l'on réalise effectivement le perçage, on constate que le centre de perçage réel (ou point de perçage réel) Mᵣ est décalé par rapport au centre de perçage théorique (ou point-cible de perçage) M, tel que défini par les coordonnées X, Y dans le troisième repère O₃, X₃, Y₃.

Cette situation est illustrée sur la Figure 3, où l'on a représenté en traits pleins le contour du verre 21, ses marquages définissant le repère O₃, X₃, Y₃, et en traits mixtes la forme d'indexage 2A et le repère associé O₁, X₁, Y₁, tel que positionnés vis-à-vis du verre 21 lorsque ce dernier est placé dans la machine de perçage 1 sur le support 2. Sont également représentés sur le verre 21 le centre de perçage réel Mᵣ en traits pleins, et le centre de perçage théorique M en traits mixtes.

Ce décalage s'exprime, dans l'un des trois repères pré-définis, qui est supposé être l'un quelconque de ces repères, pour des raisons précisées plus loin, par les coordonnées dX, dY.

De façon générale, le décalage des points de perçage réels vis-à-vis des points de perçage théoriques s'explique par le fait que les trois repères précédemment définis ne coïncident pas exactement :
- d'une part, le deuxième repère, associé aux moyens de pilotage 11 et pris pour référence, par exemple, de la position neutre de l'outil 3, n'est pas exactement calé sur le premier repère O₁, X₁, Y₁ lié au support 2. Ceci est dû aux tolérances de fabrication et à l'usure des pièces mécaniques intervenant dans le réglage de la position neutre de l'outil, à celles des pièces mécaniques des moyens d'entraînement 13, et à l'imprécision inhérente aux organes de contrôle intervenant dans l'asservissement de la position de l'outil 3, par exemple ; et
- d'autre part, le troisième repère O₃, X₃, Y₃ lié au verre 21 ne coïncide pas exactement avec le premier repère O₁, X₁, Y₁ lié au support 2. Ceci est dû notamment à l'imprécision, même si elle est extrêmement faible, de la pose de l'adaptateur sur le verre, et de l'imprécision du calage de l'adaptateur sur ledit support 2, du fait par exemple des tolérances de fabrication de ces pièces et de la déformation possible de l'adaptateur au cours de l'opération préalable de meulage.

On notera que les décalages généralement constatés sur les machines de perçage, entre les points théoriques et les points réels de perçage, conduisent à estimer que les différents repères de référence n'ont pas de décalage angulaire significatif entre eux. C'est la raison pour laquelle on considère, dans l'exposé de la présente invention, que ces repères sont uniquement décalés en translation, et que leurs axes des abscisses d'une part, et leurs axes des ordonnées d'autre part, sont parallèles. C'est ce qui a été illustré sur la Figure 3, entre les premiers O₁, X₁, Y₁ et troisième O₃, X₃, Y₃ repères.

Pour les machines de perçage courantes, il est donc nécessaire, préalablement à la première utilisation de la machine, d'estimer le décalage entre les points de perçage réels et les points de perçage théoriques, et d'étalonner la machine de façon à introduire, dans les moyens de commande 15, une correction des lois de commande. Ces opérations d'étalonnage peuvent ensuite être renouvelées périodiquement sur la durée de vie de la machine.

La correction introduite se traduit par exemple par un changement de variables : les paramètres de position pris en compte pour l'élaboration de la consigne C étant X + dX, Y + dY, en lieu et place des paramètres d'entrée X, Y.

Dans l'état de la technique, de tels procédés d'étalonnage sont réalisés à partir d'une mesure « manuelle » du décalage produit par la machine non étalonnée. En effet, suivant la technique connue, un opérateur perce au moyen de la machine non étalonnée, successivement plusieurs trous circulaires quasi-ponctuels sur un gabarit, tel qu'un verre ophtalmique, et mesure la position de ces perçages sur le gabarit, au moyen d'un pied à coulisse. L'opérateur en déduit ensuite, pour chacun des perçages, le décalage vis-à-vis des points de perçage théoriques, et introduit une correction correspondante dans les moyens programmables de pilotage de la machine. Cette correction peut par exemple prendre en compte une moyenne des décalages constatés sur l'ensemble des points de mesure.

Cette technique présente principalement deux inconvénients, à savoir la faible précision de la mesure de décalage (de l'ordre du 10^{ème} de mm), et la durée importante de l'opération.

L'invention a pour objet de proposer un procédé d'étalonnage du type précédemment décrit, permettant d'obtenir une précision nettement accrue, et représentant un temps d'opération réduit ainsi que des manipulations nettement plus simples. Ce but est atteint par un procédé d'étalonnage selon l'invention, dans lequel on réalise successivement les étapes suivantes :
- on réalise une image du gabarit préalablement percé ;
- on analyse ladite image par des moyens d'analyse d'images, de façon à mesurer le décalage entre la position du point de perçage réel et la position du point-cible; et
- on programme les moyens de pilotage, de façon à introduire une correction des coordonnées de consigne, apte à compenser ledit décalage.

Suivant d'autres caractéristiques de ce procédé :
- les marquages définissant le troisième repère comprennent des marquages qui définissent un centre et des marquages qui définissent deux axes orthogonaux ; et
- lors de l'étape de perçage, on perce le gabarit en deux points prédéterminés, correspondant chacun à un point-cible défini par des coordonnées de consigne prédéterminées, de façon à obtenir deux points de perçage réels, et la correction est basée sur une valeur moyenne de décalage de position des deux points de perçage réels par rapport aux deux points-cibles respectifs.

L'invention vise également un dispositif pour la mise en oeuvre d'un procédé d'étalonnage tel que décrit précédemment, ce dispositif comprenant :
- un dispositif de prise d'images;
- des moyens d'analyse d'images reliés audit dispositif de prise d'images, adaptés pour détecter la position de l'image d'un point de perçage réel d'un gabarit, dans un repère défini par l'image de marquages figurant sur ledit gabarit, et pour calculer un décalage de position de ladite image par rapport à un point-cible prédéterminé défini par des coordonnées pré-enregistrées ; et
- des moyens de programmation reliés d'une part aux moyens d'analyse d'images, et d'autre part aux moyens de pilotage d'une machine de perçage de verres ophtalmiques, lesdits moyens de programmation étant adaptés pour recevoir une information de décalage de la part des moyens d'analyse d'images, et pour programmer en réponse les moyens de pilotage de la machine, de façon à introduire une correction des coordonnées de consigne en fonction de ladite information de décalage.

Suivant d'autres caractéristiques du dispositif selon l'invention :
- le dispositif comprend en outre un écran, et des moyens d'éclairage d'un objet ophtalmique permettant de projeter une ombre du gabarit sur l'écran, ledit écran étant placé dans le champ d'observation dudit dispositif de prise d'images ;
- le dispositif comprend un support transparent pour recevoir le gabarit, disposé entre les moyens d'éclairage et l'écran ;
- le dispositif comprend un collimateur disposé entre les moyens d'éclairage et le support transparent pour rendre les rayons lumineux issus des moyens d'éclairage sensiblement parallèles entre eux et normaux par rapport au support ;
- l'écran est un dépoli ; et
- le dispositif de prise d'images est une caméra vidéo.

L'invention vise enfin un appareil d'usinage de verres ophtalmiques comprenant :
- une machine de perçage qui comporte un outil de perçage, un support de verre ophtalmique associé à un premier repère, et des moyens programmables de pilotage de l'outil, associés à un deuxième repère dans lequel sont exprimées des coordonnées de consigne définissant un point-cible de perçage, et
- un dispositif tel que décrit précédemment, associé à ladite machine de perçage.

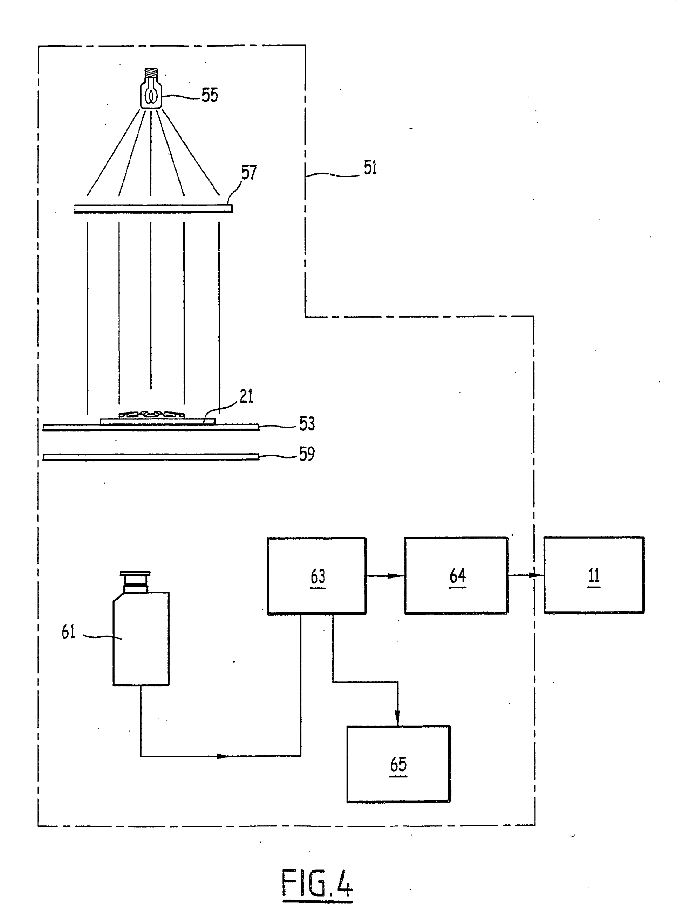

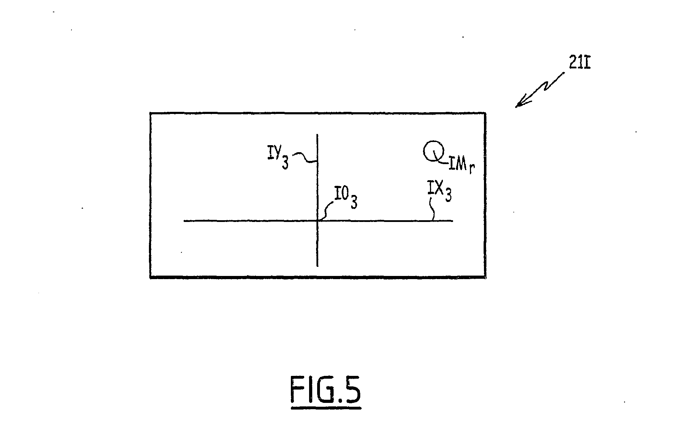

Un mode particulier de réalisation de l'invention va maintenant être décrit plus en détail en référence aux Figures 4 et 5 des dessins annexés, sur lesquels :
- la Figure 4 est une vue schématique d'un dispositif conforme à l'invention ; et
- la Figure 5 est une vue partielle de l'image d'un gabarit, tel qu'il peut être observé par le dispositif de prise d'images du dispositif selon l'invention.

Selon le procédé d'étalonnage conforme à l'invention, on perce un gabarit au moyen de la machine 1 non étalonnée, représentée sur la Figure 1, comme cela a été expliqué précédemment. Ce gabarit est, dans l'exemple représenté, constitué d'un verre ophtalmique 21, tel que décrit en référence à la Figure 2, mais pourrait être un autre objet ophtalmique, tel qu'un gabarit en matière plastique ou autre, muni de marquages de centre et d'axes.

Le gabarit 21 est débarrassé de son adaptateur, puis nettoyé afin d'ôter de la surface du gabarit toute trace éventuelle de colle provenant de l'adaptateur, et de laisser apparents, à la surface du gabarit, les marquages associés au repère O₃, X₃, Y₃.

Les coordonnées dX, dY du décalage entre les points de perçage réel Mᵣ et théorique M sont ensuite estimées par le dispositif 51 représenté sur la Figure 4.

Ce dispositif 51 comprend un support plan transparent 53 sur lequel peut être placé le gabarit 21 percé, préalablement séparé de son adaptateur.

Il comprend en outre une source de lumière 55, un collimateur 57, et un verre dépoli 59, disposés de façon que les rayons lumineux issus de la source 55 traversent le collimateur 57 pour être rendus parallèles et éclairer orthogonalement le gabarit 21 placé sur le support 53. Cette disposition permet de réaliser une projection du gabarit 21 percé, et de ses marquages O₃, X₃, Y₃, sur le verre dépoli 59.

Le dispositif comprend de plus un dispositif de prise d'images sous la forme d'une caméra vidéo 61, des moyens d'analyse d'images 63 reliés à la caméra 61, et éventuellement un écran de visualisation 65 relié aux moyens d'analyse d'images 63. L'écran 65 pourrait être également relié directement à la caméra 61.

Le verre dépoli 59, formant écran de projection de l'ombre de l'objet placé sur le support 53, est placé dans le champ de la caméra 61, de sorte que la caméra 61 observe cette ombre projetée et transmette son image aux moyens d'analyse d'images 63.

Le dispositif comprend en outre des moyens de programmation 64 reliés d'une part aux moyens d'analyse d'images 63, et d'autre part aux moyens de commande 15 des moyens de pilotage 11 de la machine 1.

Sur la Figure 5, on a représenté l'image 21I du gabarit 21 ainsi observé par la caméra 61, telle qu'elle est visible sur l'écran 65.

Sur cette image 21I apparaissent distinctement l'ombre du perçage IMᵣ, l'ombre des marquages de centre IO₃ et d'axes IX₃, IY₃.

Les moyens d'analyse d'images 63 sont adaptés pour :
- détecter l'image IMᵣ du perçage réalisé sur le gabarit 21, et l'image des marquages IO₃, IX₃, IY₃,
- calculer la position du point de perçage IMᵣ dans ce repère-image IO₃, IX₃, IY₃; et
- calculer dans ce repère, les coordonnées du décalage dX, dY entre le point Mᵣ et le point M, qui sont supposées égales à la différence des coordonnées du point IMᵣ dans le repère IO₃, IX₃, IY₃ d'une part, et de celles du point M dans le deuxième repère.

La valeur ainsi estimée du décalage dX, dY est transmise aux moyens de programmation 64.

Eventuellement, la mesure du décalage peut être effectuée sur deux points de perçage distincts ou plus, et non sur un seul comme décrit précédemment. La correction des lois de commande peut alors être basée sur une moyenne des décalages ainsi estimés.

C'est ainsi que le dispositif 51 permet de réaliser une estimation précise du décalage d'un point de perçage réel par rapport à un point-cible, et grâce à ses moyens de programmation 64, de programmer automatiquement les moyens de pilotage 15 de la machine de perçage de verres ophtalmiques, de façon à introduire une correction des lois de commande, dépendantes des coordonnées de décalage dX, dY estimées. La précision atteinte par un tel dispositif et un tel procédé d'étalonnage est de l'ordre du centième de mm.

On notera que la machine de perçage 1 et le dispositif associé, qui viennent d'être décrits, peuvent être intégrés dans un appareil d'usinage de verres ophtalmiques comprenant en outre une meuleuse. Ainsi, il est possible, au moyen d'un appareil unique, de réaliser le meulage d'un verre ophtalmique à partir d'une ébauche de lentille, et le perçage du verre ainsi obtenu en utilisant l'adaptateur de meulage fixé sur le verre, pour immobiliser le verre sur le support de perçage.

Le dispositif précédemment décrit peut servir à l'étalonnage non seulement de la machine de perçage, mais également de la meuleuse.

## Revendications

1. Procédé d'étalonnage d'une machine (1) de perçage de verres ophtalmiques, ladite machine comprenant :
- un outil de perçage (3);
- un support (2)de verre ophtalmique associé à un premier repère (O₁, X₁, Y₁) ; et
- des moyens programmables (11) de pilotage de l'outil (3), associés à un deuxième repère dans lequel sont exprimées des coordonnées de consigne (X, Y) définissant un point-cible (M) de perçage,
procédé dans lequel on réalise les étapes successives suivantes :
- on place sur le support (2) un gabarit (21) sur lequel on a préalablement porté des marquages définissant un troisième repère (O₃, X₃, Y₃) lié audit gabarit, de façon à faire coïncider sensiblement le troisième repère avec le premier ; et
- on perce le gabarit (21) en au moins un point prédéterminé correspondant à un point-cible (M) défini par des coordonnées de consigne (X, Y) prédéterminées, de façon à obtenir un point de perçage réel (Mᵣ),
ce procédé étant **caractérisé en ce qu'**on réalise ensuite successivement les étapes suivantes :
- on réalise une image (21I) du gabarit ainsi percé ;
- on analyse ladite image (21I) par des moyens d'analyse d'images, de façon à mesurer le décalage (dX, dY) entre la position du point de perçage réel (Mᵣ) et la position du point-cible (M) ; et
- on programme les moyens de pilotage (11), de façon à introduire une correction des coordonnées de consigne (X, Y), apte à compenser ledit décalage (dX, dY).

2. Procédé suivant la revendication 1, **caractérisé en ce que** les marquages définissant le troisième repère (O₃, X₃, Y₃) comprennent des marquages qui définissent un centre (O₃) et des marquages qui définissent deux axes orthogonaux (X₃, Y₃).

3. Procédé suivant la revendication 1 ou 2, **caractérisé en ce que** lors de l'étape de perçage, on perce le gabarit (21) en deux points prédéterminés, correspondant chacun à un point-cible (M) défini par des coordonnées de consigne (X, Y) prédéterminées, de façon à obtenir deux points de perçage réels (Mᵣ), et la correction est basée sur une valeur moyenne de décalage de position (dX, dY) des deux points de perçage réels (Mᵣ) par rapport aux deux points-cibles (M) respectifs.

4. Dispositif pour la mise en oeuvre d'un procédé conforme à l'une quelconque des revendications 1 à 3, comprenant :
- un dispositif de prise d'images (61);
- des moyens d'analyse d'images (63) reliés audit dispositif de prise d'images (61), adaptés pour détecter la position de l'image (IMᵣ) d'un point de perçage réel (Mᵣ) d'un gabarit (21), dans un repère (IO₃ , IX₃, IY₃) défini par l'image de marquages (O₃, X₃, Y₃) figurant sur ledit gabarit (21), et pour calculer un décalage de position de ladite image (IMᵣ) par rapport à un point-cible (M) prédéterminé défini par des coordonnées (X, Y) pré-enregistrées ; et
- des moyens de programmation (64) reliés d'une part aux moyens d'analyse d'images (63), et d'autre part aux moyens de pilotage (11) d'une machine de perçage (1) de verres ophtalmiques, lesdits moyens de programmation (64) étant adaptés pour recevoir une information de décalage (dX, dY) de la part des moyens d'analyse d'images (63), et pour programmer en réponse les moyens de pilotage (11) de la machine, de façon à introduire une correction des coordonnées de consigne (X, Y) en fonction de ladite information de décalage (dX, dY).

5. Dispositif suivant la revendication 4, **caractérisé en ce qu'**il comprend en outre un écran (59), et des moyens (55) d'éclairage d'un objet ophtalmique permettant de projeter une ombre du gabarit (21) sur l'écran (59), ledit écran (59) étant placé dans le champ d'observation dudit dispositif de prise d'images (61).

6. Dispositif suivant la revendication 5, **caractérisé en ce qu'**il comprend un support transparent (53) pour recevoir le gabarit (21), disposé entre les moyens d'éclairage (55) et l'écran (59).

7. Dispositif suivant la revendication 6, **caractérisé en ce qu'**il comprend un collimateur (57) disposé entre les moyens d'éclairage (55) et le support transparent (53) pour rendre les rayons lumineux issus des moyens d'éclairage (55) sensiblement parallèles entre eux et normaux par rapport au support (53).

8. Dispositif suivant l'une quelconque des revendications 5 à 7, **caractérisé en ce que** l'écran (59) est un dépoli.

9. Dispositif suivant l'une quelconque des revendications 4 à 8, **caractérisé en ce que** le dispositif de prise d'images (61) est une caméra vidéo.

10. Appareil d'usinage de verres ophtalmiques comprenant :
- une machine de perçage (1) qui comporte
. un outil de perçage (3);
. un support (2) de verre ophtalmique associé à un premier repère (O₁, X₁, Y₁); et
. des moyens programmables (11) de pilotage de l'outil (3), associés à un deuxième repère dans lequel sont exprimées des coordonnées de consigne (X, Y) définissant un point-cible (M) de perçage, et
- un dispositif conforme à l'une quelconque des revendications 4 à 9, associé à ladite machine de perçage (1).

## Claims

1. Method of calibrating a machine (1) for piercing ophthalmic glasses, said machine comprising:
- a piercing tool (3);
- an ophthalmic glass support (2) associated with a first reference point (O₁, X₁, Y₁); and
- programmable means (11) for guiding the tool (3), associated with a second reference point in which reference coordinates (X, Y) are expressed which define a target point (M) for piercing,
said method comprising carrying out the following successive steps:
- a template (21) on which markings have previously been made defining a third reference point (O₃, X₃, Y₃) linked to said template is placed on the support (2) so as to make the third reference point coincide substantially with the first; and
- the template (21) is pierced at at least one predetermined point corresponding to a target point (M) defined by predetermined reference coordinates (X, Y), so as to obtain a real piercing point (Mᵣ),
the method being **characterised in that** the following steps are then carried out in succession:
- an image (21I) is taken of the template thus pierced;
- this image (21I) is analysed by image analysing means, so as to measure the offset (dX, dY) between the position of the real piercing point (Mᵣ) and the position of the target point (M); and
- the guiding means (11) are programmed so as to introduce a correction to the reference coordinates (X, Y), appropriate for compensating said offset (dX, dY).

2. Method according to claim 1, **characterised in that** the markings defining the third reference point (O₃, X₃, Y₃) comprise markings which define a centre (O₃) and markings which define two orthogonal axes (X₃, Y₃).

3. Method according to claim 1 or 2, **characterised in that** during the piercing step, the template (21) is pierced at two predetermined points, each corresponding to a target point (M) defined by predetermined reference coordinates (X, Y), so as to obtain two real piercing points (Mᵣ), and the correction is based on a mean value for the offset in position (dX, dY) of the two real piercing points (Mᵣ) relative to the two respective target points (M).

4. Apparatus for carrying out a method according to any one of claims 1 to 3, comprising:
- an image taking device (61);
- image analysing means (63) connected to said image taking device (61), adapted to detect the position of the image (IMᵣ) of a real piercing point (Mᵣ) of a template (21), in a reference point (IO₃, IX₃, IY₃) defined by the image of markings (O₃, X₃, Y₃) appearing on said template (21), and to calculate an offset in position of said image (IMᵣ) relative to a predetermined target point (M) defined by pre-recorded coordinates (X, Y); and
- programming means (64) connected on the one hand to the image analysing means (63) and on the other hand to the means (11) for guiding a machine (1) for piercing ophthalmic glasses, said programming means (64) being adapted to receive offset information (dX, dY) from the image analysing means (63), and, in response, to programme the means (11) for guiding the machine, so as to introduce a correction to the reference coordinates (X, Y) as a function of said offset information (dX; dY).

5. Apparatus according to claim 4, **characterised in that** it further comprises a screen (59) and means (55) for illuminating an ophthalmic object enabling a shadow of the template (21) to be projected onto the screen (59), said screen (59) being placed in the field of observation of said image taking device (61).

6. Apparatus according to claim 5, **characterised in that** it comprises a transparent support (53) for accommodating the template (21), disposed between the illuminating means (55) and the screen (59).

7. Apparatus according to claim 6, **characterised in that** it comprises a collimator (57) arranged between the illuminating means (55) and the transparent support (53) for making the light rays emitted from the iluminating means (55) substantially parallel to one another and normal relative to the support (53).

8. Apparatus according to any one of claims 5 to 7, **characterised in that** the screen (59) is of ground glass.

9. Apparatus according to any one of claims 4 to 8, **characterised in that** the image taking device (61) is a video camera.

10. Apparatus for machining ophthalmic glass, comprising:
- a piercing machine (1) which comprises
• a piercing tool (3);
• an ophthalmic glass support (2) associated with a first reference point (O₁, X₁, Y₁); and
• programmable means (11) for guiding the tool (3), which are associated with a second reference point in which reference coordinates (X, Y) are expressed which define a target point (M) for piercing, and
- an apparatus according to any one of claims 4 to 9, associated with said piercing machine (1).

## Patentansprüche

1. Verfahren zum Eichen einer Vorrichtung (1) zum Perforieren von Brillengläsern, welche Vorrichtung
- ein Perforierungswerkzeug (3);
- einen Halter (2) für ein Brillenglas, der einem ersten Bezugssystem (O₁, X₁, Y₁) zugeordnet ist, und
- programmierbare Einrichtungen (11) zum Steuern des Werkzeugs (3) umfasst, die einem zweiten Bezugssystem zugeordnet sind, in dem die Sollkoordinaten (X, Y) ausgedrückt sind, die einen Perforierungszielpunkt (M) angeben,
bei welchem Verfahren man die folgenden Schritte durchführt:
- man ordnet auf dem Halter (2) eine Schablone (21) an, auf die man vorher Markierungen aufgebracht hat, die ein drittes Bezugssystem (O₃, X₃, Y₃) bilden, das mit der Schablone so verbunden ist, dass das dritte Bezugssystem im Wesentlichen mit dem ersten Bezugssystem zusammenfällt, und
- man perforiert die Schablone (21) an wenigstens einer bestimmten Stelle, die einem Zielpunkt (M) entspricht, der von den bestimmten Sollkoordinaten (X, Y) angegeben wird, derart, dass ein reeller Perforierungspunkt (Mᵣ) erhalten wird,
welches Verfahren **dadurch gekennzeichnet ist, dass** man anschließend der Reihe nach die folgenden Schritte ausführt:
- man erstellt ein Bild (21I) der perforierten Schablone;
- man analysiert dieses Bild (21I) mit Bildanalyseeinrichtungen, um die Abweichung (dX, dY) zwischen der Position der Stelle (Mᵣ) der reellen Perforierung und der Position des Zielpunktes (M) zu messen, und
- man programmiert die Einrichtungen (11) zum Steuern derart, dass eine Korrektur der Sollkoordinaten (X, Y) eingeführt wird, die derart ist, dass diese Abweichung (dX, dY) kompensiert wird.

2. Verfahren nach Anspruch 1, **dadurch gekennzeichnet, dass** die Markierungen, die das dritte Bezugssystem (O₃, X₃, Y₃) bilden, Markierungen, die einen Mittelpunkt (O₃) angeben, und Markierungen umfassen, die zwei orthogonale Achsen (X₃, Y₃) angeben.

3. Verfahren nach Anspruch 1 oder 2, **dadurch gekennzeichnet, dass** man beim Schritt der Perforierung die Schablone (21) an zwei bestimmten Stellen perforiert, die jeweils einem Zielpunkt (M) entsprechen, der durch die bestimmten Sollkoordinaten (X, Y) angegeben ist, um zwei reelle Perforierungspunkte (Mᵣ) zu erhalten, und dass die Korrektur auf einem Mittelwert der Abweichung der Position (dX, dY) der beiden reellen Perforierungspunkte (Mᵣ) bezüglich zweier Zielpunkte (M) jeweils basiert.

4. Vorrichtung zur Durchführung eines Verfahrens nach einem der Ansprüche 1 bis 3 mit:
- einer Einrichtung (61) zum Aufnehmen von Bildern;
- Einrichtungen (63) zum Analysieren von Bildern, die mit der Einrichtung (61) zum Aufnehmen von Bildern verbunden und so ausgestaltet sind, dass sie die Position eines Bildes (IMᵣ) eines reellen Perforierungspunktes (Mᵣ) einer Schablone (21) in einem Bezugssystem (IO₃, IX₃, IY₃) erfassen, das durch das Bild von Markierungen (O₃, X₃, Y₃) bestimmt ist, die auf der besagten Schablone (21) dargestellt sind, und eine Abweichung der Position des besagten Bildes (IMᵣ) bezüglich eines bestimmten Zielpunktes (M) berechnen, der durch vorher registrierte Koordinaten (X, Y) gegeben ist, und
- Einrichtungen (64) zum Programmieren, die einerseits mit den Einrichtungen (63) zum Analysieren von Bildern und andererseits mit den Einrichtungen (11) zum Steuern einer Perforierungsvorrichtung (1) für Brillengläser verbunden sind, welche Einrichtungen (64) zum Programmieren so ausgebildet sind, dass sie eine Information (dX, dY) über die Abweichung von den Einrichtungen (63) zum Analysieren von Bildern empfangen und darauf ansprechend die Einrichtungen (11) zum Steuern der Vorrichtung so programmieren, dass eine Korrektur der Sollkoordinaten (X, Y) in Abhängigkeit von der besagten Information (dX, dY) über die Abweichung bewirkt wird.

5. Vorrichtung nach Anspruch 4, **dadurch gekennzeichnet, dass** sie weiterhin einen Bildschirm (59) und Einrichtungen (55) zum Beleuchten eines Brillengegenstandes umfasst, die den Schatten der Schablone (21) auf den Bildschirm (59) projizieren können, welcher Bildschirm (59) in dem Beobachtungsfeld der besagten Einrichtung (61) zum Aufnehmen von Bildern angeordnet ist.

6. Vorrichtung nach Anspruch 5, **dadurch gekennzeichnet, dass** sie einen transparenten Halter (53) zum Aufnehmen der Schablone (21) umfasst, der zwischen den Einrichtungen (55) zum Beleuchten und dem Bildschirm (59) angeordnet ist.

7. Vorrichtung nach Anspruch 6, **dadurch gekennzeichnet, dass** sie einen Kollimator (57) umfasst, der zwischen den Einrichtungen (55) zum Beleuchten und dem transparenten Halter (53) angeordnet ist, um die von den Einrichtungen (55) zum Beleuchten ausgegebenen Lichtstrahlen im Wesentlichen zueinander parallel und senkrecht bezüglich des Halters (53) auszurichten.

8. Vorrichtung nach einem der Ansprüche 5 bis 7, **dadurch gekennzeichnet, dass** der Bildschirm (59) eine Mattscheibe ist.

9. Vorrichtung nach einem der Ansprüche 4 bis 8, **dadurch gekennzeichnet, dass** die Einrichtungen (61) zum Aufnehmen von Bildern eine Videokamera sind.

10. Vorrichtung zum Bearbeiten von Brillengläsern mit
- einer Perforierungsvorrichtung (1), die
ein Perforierungswerkzeug (3),
einen Halter (2) für ein Brillenglas, der einem ersten Bezugssystem (O₁, X₁, Y₁) zugeordnet ist, und
programmierbare Einrichtungen (11) zum Steuern des Werkzeugs (3) umfasst, die einem zweiten Bezugssystem zugeordnet sind, in dem die Sollkoordinaten (X, Y) ausgedrückt sind, die einen Zielpunkt (M) der Perforierung angeben, und
- mit einer Vorrichtung nach einem der Ansprüche 4 bis 9, die der besagten Perforierungsvorrichtung (1) zugeordnet ist.
